# EUROPEAN PATENT APPLICATION

(11) **EP 4 425 634 A1**
(43) Date of publication of application: **04.09.2024**
(21) Application number: 22901233.1
(22) Date of filing: 28.11.2022
(51) Int. Cl.: H01M 10/0567, H01G 11/64, H01M 4/505, H01M 4/525, H01M 10/052

(54) **NONAQUEOUS ELECTROLYTE POWER STORAGE ELEMENT, DEVICE, AND METHOD FOR USING NONAQUEOUS ELECTROLYTE POWER STORAGE ELEMENT**

(30) Priority: 02.12.2021 JP 2021196057
(71) Applicant: GS Yuasa International Ltd., Kisshoin, Minami-ku, Kyoto-shi, Kyoto 601-8520 (JP)
(72) Inventor: KISHIMOTO Akira, Kyoto-shi, Kyoto 601-8520 (JP); OKUBO Takashi, Kyoto-shi, Kyoto 601-8520 (JP)
(74) Representative: Isarpatent
(86) International application number: PCT/JP2022/043755
(87) International publication number: WO 2023/100801

(57) **Abstract**

A nonaqueous electrolyte energy storage device according to an aspect of the present invention has an end-of-discharge voltage of 3.2 V or higher in normal use. and includes a nonaqueous electrolyte containing sulfates including a plurality of sulfur atoms in one molecule.

## Description

### TECHNICAL FIELD

The present invention relates to a nonaqueous electrolyte energy storage device, a device, and a method for using a nonaqueous electrolyte energy storage device.

### BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. In addition, capacitors such as lithium ion capacitors and electric double-layer capacitors are also widely in use as nonaqueous electrolyte energy storage devices other than the nonaqueous electrolyte secondary batteries.

For improving the performance of the nonaqueous electrolyte energy storage devices, containing various additives in the nonaqueous electrolytes has been studied. Patent Document 1 describes a nonaqueous secondary battery including a nonaqueous electrolyte including an additive such as a cyclic sulfate ester.

### PRIOR ART DOCUMENTS

### PATENT DOCUMENT

Patent Document 1: JP-A-2003-308875

### SUMMARY OF THE INVENTION

### PROBLEMS TO BE SOLVED BY THE INVENTION

In the nonaqueous electrolyte energy storage device, even when the nonaqueous electrolyte contains therein such an additive as described above, the discharge capacity after a charge-discharge cycle may be insufficiently high.

An object of the present invention is to provide a nonaqueous electrolyte energy storage device in which the discharge capacity after a charge-discharge cycle is high in the case of using the device in a high voltage range, a device including such a nonaqueous electrolyte energy storage device, and a method for using such a nonaqueous electrolyte energy storage device.

### MEANS FOR SOLVING THE PROBLEMS

A nonaqueous electrolyte energy storage device according to an aspect of the present invention has an end-of-discharge voltage of 3.2 V or higher in normal use. and includes a nonaqueous electrolyte containing sulfates including a plurality of sulfur atoms in one molecule.

A device according to another aspect of the present invention includes the nonaqueous electrolyte energy storage device according to an aspect of the present invention.

A method for using the nonaqueous electrolyte energy storage device according to another aspect of the present invention includes discharging the nonaqueous electrolyte energy storage device including a nonaqueous electrolyte containing sulfates including a plurality of sulfur atoms in one molecule at an end-of-discharge voltage in a range of 3.2 V or higher.

### ADVANTAGES OF THE INVENTION

According to an aspect of the present invention, it is possible to provide a nonaqueous electrolyte energy storage device in which the discharge capacity after a charge-discharge cycle is high in the case of using the device in a high voltage range, a device including such a nonaqueous electrolyte energy storage device, and a method for using such a nonaqueous electrolyte energy storage device.

### BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus including a plurality of nonaqueous electrolyte energy storage devices.

### MODE FOR CARRYING OUT THE INVENTION

First, outlines of a nonaqueous electrolyte energy storage device, a device, and a method for using the nonaqueous electrolyte energy storage device, disclosed by the present specification. will be described.

(1) A nonaqueous electrolyte energy storage device according to an aspect of the present invention has an end-of-discharge voltage of 3.2 V or higher in normal use. and includes a nonaqueous electrolyte containing sulfates including a plurality of sulfur atoms in one molecule.

The nonaqueous electrolyte energy storage device according to (1) mentioned above has a high discharge capacity after a charge-discharge cycle int the case of using the device in a high voltage range. The reasons therefor are not clear, but the following reasons are presumed. The sulfates contained in the nonaqueous electrolyte undergo reductive decomposition to form a film that covers the active materials of the positive electrode and negative electrode. The effect of keeping the discharge capacity from being decreased is considered to be produced by the effect of reducing the resistance of the film formed by the sulfates. In this regard, when the end-of-discharge voltage is low, the positive electrode potential is further decreased. The decreased positive electrode potential accelerates cracking of the positive active material, thereby, for example, insufficiently producing the protective effect of the film formed on the positive active material by the sulfates, and thus causing the discharge capacity to be decreased. Then, the use of the nonaqueous electrolyte energy storage device in a high voltage range increases the end-of-discharge voltage to keep the positive active material from being cracked, thus effectively producing the effect of the film for keeping the discharge capacity from being decreased. In addition, in general, a compound including a plurality of sulfur atoms, which is a Lewis acid, is likely to undergo reductive decomposition. Thus, when the nonaqueous electrolyte contains the sulfates including a plurality of sulfur atoms in one molecule, which are likely to undergo reductive decomposition, and when the end-of-discharge voltage in normal use is high, that is, the negative electrode potential is low, a film is considered to be sufficiently formed on the negative active material because of accelerated reductive decomposition of the sulfates. As described above, the nonaqueous electrolyte energy storage device according to (1) mentioned above is presumed to keep the positive active material from being cracked and have a film sufficiently formed on the active materials of the positive electrode and negative electrode, thereby resulting in the increased discharge capacity after a charge-discharge cycle in the case of using the device in a high voltage range.

The term "in normal use" refers to a case of using the nonaqueous electrolyte energy storage device while employing charge-discharge conditions recommended or specified for the nonaqueous electrolyte energy storage device. The discharge conditions are determined by, for example, setting of a device in which the nonaqueous electrolyte energy storage device is used.

(2) In the nonaqueous electrolyte energy storage device according to (1) mentioned above, the positive electrode potential at the end-of-discharge voltage in the normal use mentioned above is preferably 3.4 V (vs. Li/Li⁺) or higher. The nonaqueous electrolyte energy storage device according to (2) has, for example, a positive active material kept from being cracked, thereby allowing a further increase in discharge capacity after a charge-discharge cycle in the case of using the device in a high voltage range.

(3) The nonaqueous electrolyte energy storage device according to (1) or (2) preferably includes a positive electrode including a lithium-transition metal composite oxide containing a nickel element and a manganese element. The lithium-transition metal composite oxide containing the nickel element and the manganese element is typically a positive active material, which is likely to be cracked in association with a charge-discharge cycle. Accordingly, in the nonaqueous electrolyte energy storage device according to (3) mentioned above, including the positive electrode including such a lithium-transition metal composite oxide, the effect of increasing the discharge capacity after a charge-discharge cycle in the case of using the device in a high voltage range is particularly remarkably produced.

(4) A device according to another aspect of the present invention includes the nonaqueous electrolyte energy storage device according to any one of (1) to (3) mentioned above. The nonaqueous electrolyte energy storage device included in the device according to (4) mentioned above has a high discharge capacity after a charge-discharge cycle int the case of use in a high voltage range. Accordingly, the device according to (4) mentioned above can be used for a long period of time, and the replacement frequency of the nonaqueous electrolyte energy storage device can be reduced.

(5) A method for using the nonaqueous electrolyte energy storage device according to another aspect of the present invention includes discharging the nonaqueous electrolyte energy storage device including a nonaqueous electrolyte containing sulfates including a plurality of sulfur atoms in one molecule at an end-of-discharge voltage in a range of 3.2 V or higher. In the method for using the nonaqueous electrolyte energy storage device according to (5) mentioned above, the discharge capacity after a charge-discharge cycle is high in the case of using the nonaqueous electrolyte energy storage device in a high voltage range.

A nonaqueous electrolyte energy storage device according to an embodiment of the present invention, an energy storage apparatus, a device, a method for using the nonaqueous electrolyte energy storage device, a method for manufacturing the nonaqueous electrolyte energy storage device, and other embodiments will be described in detail. It is to be noted that the names of the respective constituent members (respective constituent elements) for use in the respective embodiments may be different from the names of the respective constituent members (respective constituent elements) for use in the background art.

### <Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type obtained by stacking a plurality of positive electrodes and a plurality of negative electrodes with separators interposed therebetween, or a wound type obtained by winding a positive electrode and a negative electrode stacked with a separator interposed therebetween. The nonaqueous electrolyte is present with the positive electrode, negative electrode, and separator impregnated with the electrolyte. A nonaqueous electrolyte secondary battery (hereinafter, also referred to simply as a "secondary battery") will be described as an example of the nonaqueous electrolyte energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁷ Ω ·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, particularly preferably 10 pm or more and 25 pm or less. When the average thickness of the positive substrate is within the above-described range, it is possible to enhance the energy density per volume of the nonaqueous electrolyte energy storage device while increasing the strength of the positive substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder, a thickener, and a filler, if necessary.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an α-NaFeO₂-type crystal structure, lithium-transition metal composite oxides that have a spinel-type crystal structure, polyanion compounds, chalcogenides, and sulfur. Examples of the lithium-transition metal composite oxides that have an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 < x < 0.5, 0 < γ < 1, 0<1-x-γ), Li[LiₓCo₍₁₋ₓ₎]O₂ (0 ≤ x < 0.5), Li[LiₓNi_{γ}Mn₍₁₋ₓ₋γ₎]O₂ (0 ≤ x < 0.5, 0 < γ < 1, 0 < 1-x-γ), Li[LiₓNi_{γ}Mn_{β}Co_{(1-x-γ-β)}]O₂ (0 ≤ x < 0.5, 0 < γ, 0 < β, 0.5 < γ + β < 1, 0 < 1-x-γ-β), and Li[LiₓNi_{γ}Co_{β}Al_{(1-x-γ-β)}]O₂ (0 ≤ x < 0.5, 0 < γ, 0 < β, 0.5 < γ + β < 1, 0 < 1-x-γ-β). Examples of the lithium-transition metal composite oxides that have a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. In the positive active material layer, one of these materials may be used alone, or two or more thereof may be used in mixture.

The positive active material preferably includes a lithium-transition metal composite oxide containing a nickel element, more preferably includes a lithium-transition metal composite oxide containing a nickel element and a manganese element. Such a lithium-transition metal composite oxide is typically a positive active material, which is likely to be cracked in association with a charge-discharge cycle. For this reason, when the nonaqueous electrolyte energy storage device in which such a lithium-transition metal composite oxide is used is an embodiment of the present invention, the effect of increasing the discharge capacity after a charge-discharge cycle in the case of using the device in a high voltage range is particularly remarkably produced.

The content of the nickel element with respect to the metal elements excluding the lithium element in the lithium-transition metal composite oxide is preferably 30 mol% or more and 100 mol% or less, more preferably 40 mol% or more and 90 mol% or less, still more preferably 50 mol% or more and 80 mol% or less.

The content of the manganese element with respect to metal elements excluding the lithium element in the lithium-transition metal composite oxide is preferably 5 mol% or more and 70 mol% or less, more preferably 10 mol% or more and 50 mol% or less, still more preferably 15 mol% or more and 40 mol% or less.

The lithium-transition metal composite oxide may further contain metal elements (such as a cobalt element and an aluminum element) other than the lithium element, the nickel element, and the manganese element. The lithium-transition metal composite oxide may preferably further contain a cobalt element. The total content of the nickel element and manganese element with respect to the metal elements excluding the lithium element in the lithium-transition metal composite oxide may be, however, preferably 50 mol% or more, more preferably 70 mol% or more, or 80 mol% or more. The total content of the nickel element and manganese element with respect to the metal elements excluding the lithium element in the lithium-transition metal composite oxide may be 100 mol% or less, or may be 90 mol% or less.

The lithium-transition metal composite oxide may be a compound represented by the following formula 1.

Li_{1+α}Me_{1-α}O₂... 1

In the formula 1, Me represent metal elements other than Li, including Ni and Mn. The condition of 0 ≤ α < 1 is met.

In the formula 1, a may be 0 or more and 0.5 or less, 0 or more and 0.3 or less, or 0 or more and 0.1 or less. For the content (composition ratio) of each of Ni, Mn, and the like with respect to Me, a suitable value of the content can be employed for each of the elements in the lithium-transition metal composite oxide. Me may further include metal elements other than Ni and Mn.

The content of the lithium-transition metal composite oxide in the positive active material layer is preferably 50% by mass or more and 99% by mass or less, more preferably 70% by mass or more and 98% by mass or less, still more preferably 80% by mass or more and 95% by mass or less. In addition, the content of the lithium-transition metal composite oxide with respect to all of the positive active materials is preferably 50% by mass or more and 100% by mass or less, and more preferably 70% by mass or more, 90% by mass or more, 95% by mass or more, or 100% by mass.

The positive active material is typically particles (powder). The average particle size of the positive active material is preferably 0.1 pm or more and 20 pm or less, for example. By setting the average particle size of the positive active material to be equal to or more than the lower limit, the positive active material is easily manufactured or handled. By setting the average particle size of the positive active material to be equal to or less than the upper limit mentioned above, the electron conductivity of the positive active material layer is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the positive active material in the positive material layer is preferably 50% by mass or more and 99% by mass or less, more preferably 70% by mass or more and 98% by mass or less, still more preferably 80% by mass or more and 95% by mass or less. When the content of the positive active material falls within the range mentioned above, a balance can be achieved between the increased energy density and manufacturability of the positive active material layer.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. In addition, these materials may be used in combination. For example, a composite material of carbon black and CNT may be used. Among these materials, carbon black is preferable from the viewpoint of electron conductivity and coatability, and in particular, acetylene black is preferable.

The content of the conductive agent in the positive active material layer is preferably 1% by mass or more and 10% by mass or less, more preferably 3% by mass or more and 9% by mass or less. When the content of the conductive agent falls within the range mentioned above, the energy density of the nonaqueous electrolyte energy storage device can be enhanced.

Examples of the binder mentioned above include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. The content of the binder falls within the range mentioned above, thereby allowing the positive active material to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agent, the binder, the thickener, and the filler.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, particularly preferably 5 pm or more and 20 pm or less. When the average thickness of the negative substrate is within the above-described range, it is possible to enhance the energy density per volume of the nonaqueous electrolyte energy storage device while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, or transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of occluding and releasing lithium ions is typically used. Examples of the negative active material include metal Li; metals or metalloids such as Si and Sn; metal oxides or metalloid oxides such as oxides of Si, oxides of Ti, and oxides of Sn; titanium-containing oxides such as Li₄Ti₅O₁₂, LiTiO₂, and TiNb₂O₇; polyphosphoric acid compounds; silicon carbides; and carbon materials such as graphite and non-graphitic carbon (easily graphitizable carbon or hardly graphitizable carbon). Among these materials, the silicon materials (such as Si and oxides of Si) and the carbon materials are preferable, the carbon materials are more preferable, and graphite is still more preferable. When such a negative active material is used, the negative electrode potential becomes sufficiently low, and thus, a film is effectively formed by sulfates including a plurality of sulfur atoms in one molecule. In the negative active material layer, one of these materials may be used alone, or two or more thereof may be used in mixture.

The term "graphite" refers to a carbon material in which an average lattice spacing (d₀₀₂) of the (002) plane determined by an X-ray diffraction method before charge-discharge or in a discharge state is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average lattice spacing (d₀₀₂) of the (002) plane determined by the X-ray diffraction method before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a half cell that has, for use as a working electrode, a negative electrode containing a carbon material as a negative active material, and has metal Li for use as a counter electrode.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or greater than the above lower limit, the negative active material is easily produced or handled. By setting the average particle size of the negative active material to be equal to or less than the upper limit, the electron conductivity of the negative active material layer is improved. A crusher a classifier, or the like is used in order to obtain a powder with a predetermined particle size. The crushing method and the classification method can be selected from, for example, the methods exemplified for the positive electrode. When the negative active material is a metal such as metal Li, the negative active material layer may have the form of a foil.

The content of the negative active material in the negative active material layer is preferably 60% by mass or more and 99% by mass or less, more preferably 90% by mass or more and 98% by mass or less. The content of the negative active material falls within the range mentioned above, thereby allowing a balance to be achieved between the increased energy density and manufacturability of the negative active material layer.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material of the substrate layer of the separator, a polyolefin such as polyethylene or polypropylene is preferable from the viewpoint of a shutdown function, and polyimide, aramid or the like is preferable from the viewpoint of resistance to oxidation and decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, the silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte contains sulfates including a plurality of sulfur atoms in one molecule. The nonaqueous electrolyte is typically a nonaqueous electrolyte solution including a nonaqueous solvent; and an electrolyte salt and sulfates including a plurality of sulfur atoms in one molecule, dissolved in the nonaqueous solvent.

The sulfates refer to compounds including a structure that has two carbon atoms each bonded to an oxysulfonyloxy group (-O-S(= O)₂-O-). The number of sulfur atoms in the sulfates including a plurality of sulfur atoms in one molecule also includes the number of sulfur atoms that do not constitute an oxysulfonyloxy group. The number of sulfur atoms included in the sulfates including a plurality of sulfur atoms in one molecule is preferably 2 or more and 4 or less, more preferably 2 or 3, still more preferably 2.

The sulfates including a plurality of sulfur atoms in one molecule may have one oxysulfonyloxy group or a plurality of oxysulfonyloxy groups, but preferably have a plurality of oxysulfonyloxy groups. The number of the oxysulfonyloxy groups of the sulfates including a plurality of sulfur atoms in one molecule is preferably 1 or more and 3 or less, more preferably 1 or 2, still more preferably 2.

The sulfates including a plurality of sulfur atoms in one molecule preferably have a ring structure containing an oxysulfonyloxy group, that is, are preferably cyclic sulfates, and more preferably have two or more ring structures each containing an oxysulfonyloxy group.

The sulfates including a plurality of sulfur atoms in one molecule may be composed of only carbon atoms, hydrogen atoms, sulfur atoms, and oxygen atoms. In such a case, a film that is greater in effect of suppressing a decrease in discharge capacity can be formed on the active materials of the positive electrode and negative electrode.

Examples of the sulfates including a plurality of sulfur atoms in one molecule include a compound represented by the following formula 2 or 3, and a compound represented by the formula 3 is preferable.

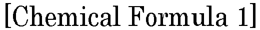

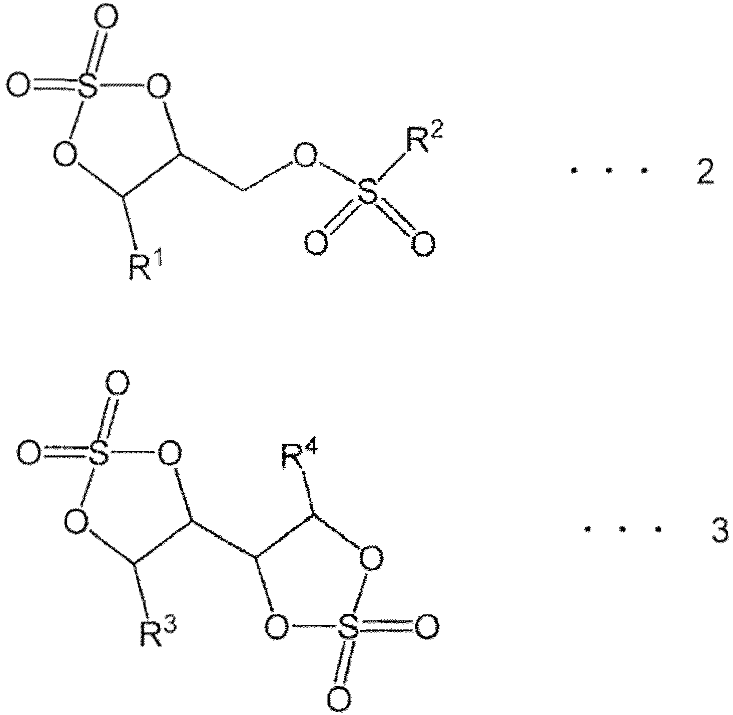

In the formulas 2 and 3, R¹, R³, and R⁴ are each independently a hydrogen atom, a halogen atom, or an alkyl group having 1 to 6 carbon atoms. R² is a hydrogen atom, a halogen atom, an alkyl group having 1 to 6 carbon atoms, a halogenated alkyl group having 1 to 6 carbon atoms, or an alkoxy group having 1 to 6 carbon atoms.

R¹ is preferably a hydrogen atom or an alkyl group having 1 to 6 carbon atoms, more preferably a hydrogen atom. R² is preferably an alkyl group having 1 to 6 carbon atoms, more preferably a methyl group. R³ is preferably a hydrogen atom or an alkyl group having 1 to 6 carbon atoms, more preferably a hydrogen atom. R⁴ is preferably a hydrogen atom or an alkyl group having 1 to 6 carbon atoms, more preferably a hydrogen atom.

Specific examples of the sulfates including a plurality of sulfur atoms in one molecule include 4,4'-bis(2,2-dioxo-1,3,2-dioxathiolane) and 4-methylsulfonyloxymethyl-2,2-dioxo-1,3,2-dioxathiolane, and 4,4'-bis(2,2-dioxo-1, 3,2-dioxathiolane) is preferable. One of, or two or more of the sulfates including a plurality of sulfur atoms in one molecule can be used.

The content of the sulfates including a plurality of sulfur atoms in one molecule in the nonaqueous electrolyte or the nonaqueous electrolyte solution is preferably 0.01% by mass or more and 5% by mass or less, more preferably 0.1% by mass or more and 3% by mass or less, still more preferably 0.2% by mass or more and 2% by mass or less, even more preferably 0.3% by mass or more and 1.5% by mass or less. The upper limit of the content may be 1.2% by mass, 1.0% by mass, 0.8% by mass, or 0.5% by mass. When the content of the sulfates including a plurality of sulfur atoms in one molecule falls within the range mentioned above, an appropriate amount of film is formed on the active materials of the positive electrode and negative electrode, thereby further increasing the discharge capacity after a charge-discharge cycle in the case of using the device in a high voltage range.

It is to be noted that the sulfates including a plurality of sulfur atoms in one molecule are consumed by reductive composition thereof in association with charge-discharge to form a film on the active materials of the positive electrode and negative electrode. Thus, if the sulfates including a plurality of sulfur atoms in one molecule remain even in small amounts in the nonaqueous electrolyte or nonaqueous electrolyte solution of the nonaqueous electrolyte energy storage device subjected to charge-discharge at least once, a film is considered sufficiently formed on the active materials of the positive electrode and negative electrode by reductive decomposition of the sulfates contained in the nonaqueous electrolyte or nonaqueous electrolyte solution included in the nonaqueous electrolyte energy storage device subjected to no charge-discharge, thereby achieving the effect of increasing the discharge capacity after a charge-discharge cycle in the case of using the device in a high voltage range.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these salts, an inorganic lithium salt is preferable, and LiPF₆ is more preferable.

The content of the electrolyte salt in the nonaqueous electrolyte solution is, at 20°C and 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

The nonaqueous electrolyte solution may include components other than the sulfates including a plurality of sulfur atoms in one molecule, the nonaqueous solvent, and the electrolyte salt. Examples of the other components include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite (1,3,2-dioxathiolane-2,2-dioxide), propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of the other components may be used alone, or two or more thereof may be used in mixture.

The content of the other components contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. The content of the other components falls within the range mentioned above, thereby making it possible to improve capacity retention performance or cycle performance after high-temperature storage, and to further improve safety.

As the nonaqueous electrolyte, a nonaqueous electrolyte solution and a solid electrolyte may be used in combination. The solid electrolyte can be selected from any material with ionic conductivity, which is solid at normal temperature (for example, 15°C to 25°C), such as lithium, sodium, and calcium. Examples of the solid electrolyte include sulfide solid electrolytes, oxide solid electrolytes, nitride solid electrolytes, and polymer solid electrolytes.

### (End-of-discharge voltage in normal use, etc.)

The end-of-discharge voltage in normal use in the nonaqueous electrolyte energy storage device according to an embodiment of the present invention is 3.2 V or higher, preferably 3.25 V or higher, and may be more preferably 3.3 V or higher. The end-of-discharge voltage in normal use is set to be equal to or more than the value mentioned above, thereby increasing the discharge capacity after a charge-discharge cycle in the case of using the device in a high voltage range. The end-of-discharge voltage in normal use is preferably 3.8 V or lower, more preferably 3.7 V or lower, still more preferably 3.6 V or lower, even more preferably 3.5 V or lower, and may be particularly preferably 3.4 V or lower. The end-of-discharge voltage in normal use is set to be equal to or less than the value mentioned above, thereby allowing the discharge capacity, the energy density, and the like to be increased.

The positive electrode potential at the end-of-discharge voltage in normal use in the nonaqueous electrolyte energy storage device according to an embodiment of the present invention is preferably 3.4 V (vs. Li/Li⁺) or higher, more preferably 3.45 V (vs. Li/Li⁺) or higher, and may be still more preferably 3.5 V (vs. Li/Li⁺) or higher. When the positive electrode potential at the end-of-discharge voltage in normal use is set to be equal to or more than the value mentioned above, for example, sufficiently keeping the positive active material from being cracked further increases the discharge capacity after a charge-discharge cycle in the case of using the device in a high voltage range. In contrast, the positive electrode potential at the end-of-discharge voltage in normal use is preferably 4.0 V (vs. Li/Li⁺) or lower, more preferably 3.9 V (vs. Li/Li⁺) or lower, still more preferably 3.8 V (vs. Li/Li⁺) or lower, even more preferably 3.7 V (vs. Li/Li⁺) or lower, and may be even more preferably 3.6 V (vs. Li/Li⁺) or lower.

The negative electrode potential at the end-of-discharge voltage in normal use in the nonaqueous electrolyte energy storage device according to an embodiment of the present invention is preferably 0.22 V (vs. Li/Li⁺) or lower, more preferably 0.20 V (vs. Li/Li⁺) or lower. When the negative electrode potential at the end-of-discharge voltage in normal use is set to be equal to or less than the value mentioned above, for example, the formation of a film by the sulfates including a plurality of sulfur atoms in one molecule sufficiently proceeds, thereby further increasing the discharge capacity after a charge-discharge cycle in the case of using the device in a high voltage range. In contrast, the negative electrode potential at the end-of-discharge voltage in normal use is preferably 0.1 V (vs. Li/Li⁺) or higher, more preferably 0.15 V (vs. Li/Li⁺) or higher.

The application of the nonaqueous electrolyte energy storage device according to an embodiment of the present embodiment is not particularly limited, and can be used for a power source industrial devices, e.g., a power source for automobiles such as electric vehicles (EV), hybrid vehicles (HEV), and plug-in hybrid vehicles (PHEV), a power source for electronic devices such as personal computers and communication terminals, or a power source for power storage. It is in a preferable aspect that the nonaqueous electrolyte energy storage device is an industrial energy storage device, because the nonaqueous electrolyte energy storage device has a high discharge capacity after a charge-discharge cycle int the case of use in a high voltage range. The industrial energy storage device is used as, for example, a power source for power storage, an emergency power source, a power source for an automated guided vehicle, a power source for an EV construction machine, a power source for an electric forklift, a power source for a railway vehicle, a power source for a communication base station, a backup power source for a non-electrified area, a power source for railway communication, and the like.

The shape of the nonaqueous electrolyte energy storage device according to the present embodiment is not particularly limited, and examples thereof include cylindrical batteries, prismatic batteries, flat batteries, coin batteries, and button batteries.

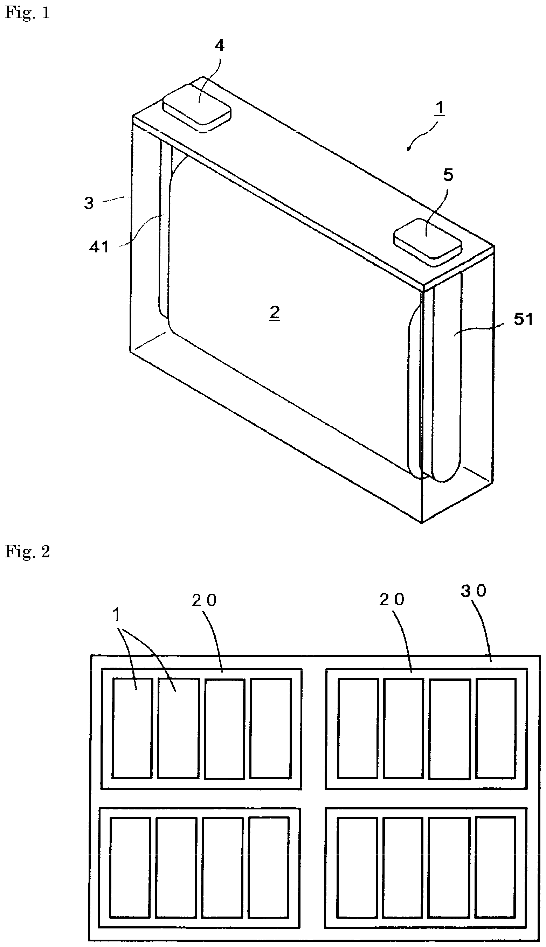

Fig. 1 illustrates a nonaqueous electrolyte energy storage device 1 as an example of prismatic batteries. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles, a power source for electronic devices such as personal computers and communication terminals, or a power source for power storage, or the like. In this case, the technique of the present invention may be applied to at least one nonaqueous electrolyte energy storage device included in the energy storage unit.

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Device>

A device according to an embodiment of the present invention includes the above-described nonaqueous electrolyte energy storage device according to an embodiment of the present invention. Examples of the device include, but are not particularly limited to, electronic devices such as personal computers and communication terminals, home electric appliances, automobiles (such as EV, HEV, and PHEV), and other industrial devices.

In use of the device, the end-of-discharge voltage of the nonaqueous electrolyte energy storage device is preferably set to a value of 3.2 V or higher. More specifically, the end-of-discharge voltage is preferably set such that the device is substantially not used any more when the voltage reaches a predetermined value of 3.2 V or higher. Such a setting increases the discharge capacity after a charge-discharge cycle in the case of use in a high voltage range in the nonaqueous electrolyte energy storage device included in the device. The suitable range of the end-of-discharge voltage is the same as that described above as the suitable range of the end-of-discharge voltage in normal use of the nonaqueous electrolyte energy storage device. The device preferably includes a controller that controls the end-of-discharge voltage and the like.

### <Method for using nonaqueous electrolyte energy storage device>

A method for using the nonaqueous electrolyte energy storage device according to an embodiment of the present invention includes discharging the nonaqueous electrolyte energy storage device including a nonaqueous electrolyte containing sulfates including a plurality of sulfur atoms in one molecule at an end-of-discharge voltage in a range of 3.2 V or higher.

In the using method, the above-described nonaqueous electrolyte energy storage device according to an embodiment of the present invention can be suitably used. In addition, the suitable range of the end-of-discharge voltage in the using method is the same as that described above as the end-of-discharge voltage in normal use of the nonaqueous electrolyte energy storage device. In the using method, the positive electrode potential and the negative electrode potential at the end-of-discharge voltage fall within the suitable ranges of the positive electrode potential and negative electrode potential at the end-of-discharge voltage in normal use in the nonaqueous electrolyte energy storage device described above. In addition, in the using method, the above-described device according to an embodiment of the present invention can be suitably used. In the using method, the discharge capacity after a charge-discharge cycle is high in the case of using the nonaqueous electrolyte energy storage device in a high voltage range.

### <Method for manufacturing nonaqueous electrolyte energy storage device>

A method for manufacturing the nonaqueous electrolyte energy storage device according to the present embodiment can be appropriately selected from publicly known methods. The manufacturing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode, and forming an electrode assembly by stacking or winding the positive electrode and the negative electrode with a separator interposed therebetween.

The nonaqueous electrolyte can be prepared, for example, by mixing a nonaqueous solvent, an electrolyte salt, and the sulfates including a plurality of sulfur atoms in one molecule. The specific forms and suitable forms of the nonaqueous electrolyte, positive electrode, negative electrode, and the like to be prepared are the same as the specific forms and suitable forms of the nonaqueous electrolyte, positive electrode, negative electrode, and the like included in the above-described nonaqueous electrolyte energy storage device according to an embodiment of the present invention.

Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

### <Other embodiments>

The nonaqueous electrolyte energy storage device according to the present invention is not limited to the embodiment described above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to one embodiment can be deleted. In addition, a well-known technique can be added to the configuration according to one embodiment.

While a case where the nonaqueous electrolyte energy storage device is used as a nonaqueous electrolyte secondary battery (for example, lithium ion secondary battery) that is chargeable and dischargeable has been described in the embodiment mentioned above, the type, shape, dimensions, capacity, and the like of the nonaqueous electrolyte energy storage device are arbitrary. The present invention can also be applied to capacitors such as various secondary batteries, electric double-layer capacitors, or lithium ion capacitors.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

### EXAMPLES

Hereinafter, the present invention will be described in more detail with reference to examples, but the present invention is not to be considered limited to the following examples.

The compounds (sulfates) used in the examples and comparative examples are shown below.
A: 4,4'-bis(2,2-dioxo-1,3,2-dioxathiolane)
B: 1,3,2-dioxathiolane-2,2-dioxide

### [Example 1]

### (Fabrication of positive electrode)

Prepared was a positive composite paste containing Li_{1.0}Ni_{0.6}Co_{0.2}Mn_{0.2}O₂ as a positive active material, a polyvinylidene fluoride (PVDF) as a binder, and acetylene black (AB) as a conductive agent with N-methylpyrrolidone (NMP) as a dispersion medium. The ratios by mass of the positive active material, conductive agent, and binder were set to be 94.5 : 1.5 : 4.0 in terms of solid content. The positive composite paste was applied onto an aluminum foil as a positive substrate, and dried to form a positive active material layer. Thus, a positive electrode with the positive active material layer stacked on the positive substrate was obtained.

### (Fabrication of negative electrode)

Prepared was a negative composite paste containing graphite as a negative active material, a styrene-butadiene rubber (SBR) as a binder, and a carboxymethyl cellulose (CMC) as a thickener with water as a dispersion medium. The ratios by mass of the negative active material, binder, and thickener were set to be 97.8 : 1.0 : 1.2 in terms of solid content. The negative composite paste was applied onto a copper foil as a negative substrate, and dried to form a negative active material layer. Thus, a negative electrode with the negative active material layer stacked on the negative substrate was obtained.

### (Preparation of nonaqueous electrolyte)

Lithium hexafluorophosphate (LiPF₆) as an electrolyte salt was mixed at a concentration of 1.0 mol/dm³ with a nonaqueous solvent obtained by mixing an ethylene carbonate (EC), a propylene carbonate (PC), and an ethyl methyl carbonate (EMC) at volume ratios of 25 : 5 : 70. Into this mixed solution, a vinylene carbonate (VC), a lithium difluorophosphate, and 4,4'-bis(2,2-dioxo-1,3,2-dioxathiolane) (A) as a sulfate including a plurality of sulfur atoms in one molecule were mixed respectively at contents of 0.40% by mass, 0.50% by mass, and 0.40% by mass to prepare a nonaqueous electrolyte.

### (Assembly of nonaqueous electrolyte energy storage device)

The positive electrode and the negative electrode were stacked with a polyethylene separator interposed therebetween to fabricate an electrode assembly. The electrode assembly was housed in a case, and the nonaqueous electrolyte was injected into the case to obtain a nonaqueous electrolyte energy storage device according to Example 1.

### [Examples 2 to 12 and Comparative Examples 1 to 10]

Nonaqueous electrolyte energy storage devices according to Examples 2 to 12 and Comparative Examples 1 to 10 were obtained similarly to Example 1 except for the types and contents of the sulfates contained in the nonaqueous electrolytes as shown in Table 1. It is to be noted that "-" in the column of the type of the sulfates in Table 1 indicates that no sulfates are contained. In addition, for comparison, the same nonaqueous electrolyte energy storage device is listed as different comparative examples in Table 1.

### [Evaluation]

### (Charge-discharge cycle test)

Each of the obtained nonaqueous electrolyte energy storage devices was subjected to a charge-discharge cycle test in the following manner. At 45°C, constant current constant voltage charge was performed at a charge current of 1.0 C and an end-of-charge voltage of 4.25 V. The end-of-charge condition was set at a time point at which the current value was decreased to 0.01 C. Thereafter, constant current discharge was performed at a discharge current of 1.0 C and the end-of-discharge voltage listed in Table 1. After each of the charge and the discharge, a pause period of 10 minutes was provided. This charge-discharge was performed for 500 cycles in each of the nonaqueous electrolyte energy storage devices according to Examples 1 to 9 and Comparative Examples 1 to 5 and 7 to 10, and for 600 cycles in each of the nonaqueous electrolyte energy storage devices according to Examples 10 to 12 and Comparative Example 6. Further, the positive electrode potential and the negative electrode potential at the end-of-discharge voltage are shown together in Table 1.

With respect to the discharge capacity of the 500th cycle in each of the nonaqueous electrolyte energy storage devices according to Examples 1 to 9 and Comparative Examples 1 to 5 and 7 to 10 and the discharge capacity of the 600th cycle in each of the nonaqueous electrolyte energy storage devices according to Examples 10 to 12 and Comparative Example 6, relative values were determined with, as a reference (100.0%), the discharge capacity of the nonaqueous electrolyte energy storage device according to the comparative example at the same end-of-discharge voltage without the sulfates contained in the nonaqueous electrolyte. Further, the nonaqueous electrolyte energy storage devices with the relative values more than 100.0%, that is, the nonaqueous electrolyte energy storage devices compared under the same charge-discharge conditions such as the end-of-discharge voltage with each other, with the discharge capacity after the charge-discharge cycles higher than that of the nonaqueous electrolyte energy storage device according to the comparative example without the sulfates contained in the nonaqueous electrolyte has been determined to be capable of solving the problem. The results are shown in Table 1.

**[Table 1]**

| | Sulfates | | End-of-discharge Voltage /V | Positive Electrode Potential /V(vs.Li/Li⁺) | Negative Electrode Potential /V(vs.Li/Li⁺) | Discharge Capacity *after Charge-Discharge Cycle Relative Value/% |
|---|---|---|---|---|---|---|
| | Type | Content /% by mass | | | | |
| Comparative Example 1 | - | 0.00 | 2.75 | 2.99 | 0.24 | 100.0 |
| Comparative Example 2 | A | 1.20 | | | | 98 . 8 |
| Comparative Example 3 | - | 0.00 | 3.29 | 3.49 | 0.20 | 100.0 |
| Example 1 | A | 0.40 | | | | 101.7 |
| Example 2 | A | 0.80 | | | | 102.2 |
| Example 3 | A | 1.20 | | | | 101.4 |
| Comparative Example 4 | - | 0.00 | 3.36 | 3.55 | 0.19 | 100.0 |
| Example 4 | A | 0.40 | | | | 101.3 |
| Example 5 | A | 0.80 | | | | 101.9 |
| Example 6 | A | 1.20 | | | | 101.6 |
| Comparative Example 5 | - | 0.00 | 3.40 | 3.59 | 0.19 | 100.0 |
| Example 7 | A | 0.40 | | | | 101.6 |
| Example 8 | A | 0.80 | | | | 101.8 |
| Example 9 | A | 1.20 | | | | 102.4 |
| Comparative Example 6 | - | 0.00 | 3.49 | 3.67 | 0.18 | 100.0 |
| Example 10 | A | 0.40 | | | | 101.8 |
| Example 11 | A | 0.80 | | | | 102.3 |
| Example 12 | A | 1.20 | | | | 102.0 |
| Comparative Example 7 | - | 0.00 | 2.75 | 2.99 | 0.24 | 100.0 |
| Comparative Example 8 | B | 1.00 | | | | 89.8 |
| Comparative Example 9 | - | 0.00 | 3.49 | 3.67 | 0.18 | 100.0 |
| Comparative Example 10 | B | 1.00 | | | | 100.1 |

| | | | | | | |
|---|---|---|---|---|---|---|
| *600 cycles in Comparative Example 6 and Examples 10 to 12, and 500 cycles in others | | | | | | |

As in each of the nonaqueous electrolyte energy storage devices according to Comparative Examples 2, 8 and 10, when the end-of-discharge voltage was lower than 3.2 V, or when the sulfates including only one sulfur atom in one molecule was contained in the nonaqueous electrolyte, the discharge capacity after the charge-discharge cycles was almost the same or lower as compared with the case where the sulfates were not contained in the nonaqueous electrolyte. In contrast, as in each of the nonaqueous electrolyte energy storage devices according to Examples 1 to 12, when the end-of-discharge voltage was 3.2 V or higher, and when the sulfates including a plurality of sulfur atoms in one molecule was contained in the nonaqueous electrolyte, the discharge capacity after the charge-discharge cycles was sufficiently higher as compared with the case where the sulfates were not contained in the nonaqueous electrolyte. Thus, the nonaqueous electrolyte energy storage device that has an end-of-discharge voltage of 3.2 V or higher in normal use, and includes the nonaqueous electrolyte containing the sulfates including a plurality of sulfur atoms in one molecule, has been found to be high in discharge capacity after a charge-discharge cycle in the case of using the device in a high voltage range.

### INDUSTRIAL APPLICABILITY

The present invention can be applied to nonaqueous electrolyte energy storage devices and the like for use as power sources for electronic devices such as personal computers and communication terminals, and automobiles and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device having an end-of-discharge voltage of 3.2 V or higher in normal use, and comprising a nonaqueous electrolyte containing sulfates including a plurality of sulfur atoms in one molecule.

2. The nonaqueous electrolyte energy storage device according to claim 1, wherein a positive electrode potential at an end-of-discharge voltage in normal use is 3.4 V (vs. Li/Li⁺) or higher.

3. The nonaqueous electrolyte energy storage device according to claim 1 or 2, further comprising a positive electrode including a lithium-transition metal composite oxide containing a nickel element and a manganese element.

4. A device comprising the nonaqueous electrolyte energy storage device according to claim 1 or 2.

5. A method for using a nonaqueous electrolyte energy storage device, the method comprising discharging the nonaqueous electrolyte energy storage device including a nonaqueous electrolyte containing sulfates including a plurality of sulfur atoms in one molecule at an end-of-discharge voltage in a range of 3.2 V or higher.
